# EUROPEAN PATENT APPLICATION

(11) **EP 4 191 724 A1**
(43) Date of publication of application: **07.06.2023**
(21) Application number: 21850123.7
(22) Date of filing: 14.06.2021
(51) Int. Cl.: H01M 10/052, H01M 4/525, H01M 10/0568, H01M 10/0569

(54) **LITHIUM SECONDARY BATTERY**

(30) Priority: 30.07.2020 JP 2020129109
(71) Applicant: PANASONIC INTELLECTUAL PROPERTY MANAGEMENT CO., LTD., Chuo-ku Osaka-shi Osaka 540-6207 (JP)
(72) Inventor: TERADA, Shoshi, Osaka-shi, Osaka 540-6207 (JP); KANO, Akira, Osaka-shi, Osaka 540-6207 (JP)
(74) Representative: Novagraaf International SA
(86) International application number: PCT/JP2021/022507
(87) International publication number: WO 2022/024568

(57) **Abstract**

A lithium secondary battery includes a positive electrode, a negative electrode, a separator disposed between the positive electrode and the negative electrode, and a non-aqueous electrolyte. The positive electrode includes a lithium-transition metal composite oxide. The lithium-transition metal composite oxide contains at least Ni, and has a ratio of Ni to total metal elements other than Li of 90 mol% or more. In the negative electrode, lithium metal deposits during charge, and the lithium metal dissolves during discharge. The non-aqueous electrolyte includes a non-aqueous solvent, lithium ions, an oxalate complex anion having fluorine, and nitrate anions.

## Description

### [Technical Field]

The present disclosure relates to a lithium secondary battery.

### [Background Art]

Lithium ion secondary batteries are known as secondary batteries with high capacity. In lithium ion secondary batteries, for example, a carbon material is used as the negative electrode active material. The carbon material reversibly absorbs and releases lithium ions, through which charge and discharge proceed.

On the other hand, lithium secondary batteries (also called lithium metal secondary batteries), in which lithium metal is used as the negative electrode active material, have a further higher theoretical capacity density. In a lithium secondary battery, lithium metal deposits on the negative electrode current collector in the charging process, and the deposited lithium metal dissolves in the non-aqueous electrolyte in the discharging process.

However, in the lithium secondary battery, it is difficult to control the deposition morphology of lithium metal. When lithium metal deposits in a dendritic form, the specific surface area of the negative electrode increases, and the side reaction with the non-aqueous electrolyte increases. Moreover, an inert lithium that cannot contribute to charge and discharge is produced, causing a reduction in discharge capacity.

Patent Literature 1 proposes a non-aqueous electrolyte secondary battery including a positive electrode having a positive electrode current collector and a positive electrode mixture layer formed on the current collector, a negative electrode having a negative electrode current collector, and a non-aqueous electrolyte, in which lithium metal deposits on the negative electrode current collector during charge, and the above lithium metal dissolves in the non-aqueous electrolyte during discharge. The non-aqueous electrolyte includes a lithium salt having an oxalate complex as an anion. The addition of the lithium salt having an oxalate complex as an anion in the non-aqueous electrolyte can allow lithium metal to deposit uniformly on the negative electrode, which can specifically suppress the swelling of the negative electrode.

Patent Literature 2 proposes a lithium-ion electrochemical cell including: a metal oxide cathode; an anode which is lithium metal or lithium metal alloy; a separator between the anode and the cathode; a non-aqueous electrolyte including one or more kinds of non-aqueous solvents and one or more kinds of lithium salts; and a nitrogen-containing substance. The nitrogen-containing substance includes an inorganic nitrate, and the nitrogen-containing substance is soluble in electrolyte. Patent Literature 2 discloses that "during the operation or cycling of the electrochemical cell, the nitrogen-containing compound can form an ion-conductive surface layer uniformly on the lithium anode. The formation of the ion-conductive surface layer can suppress the dendritic formation and the growth of lithium with large surface area on the anode, and thus can facilitate a uniform deposition of lithium on the anode while the cell is charged."

### [Citation List]

### [Patent Literature]

[PTL 1] International Publication WO2018/179782
[PTL 2] Japanese Laid-Open Patent Publication No. 2019-24009

### [Summary of Invention]

In order to achieve a lithium secondary battery with a higher capacity, it is desirable to use a Ni-rich lithium-transition metal composite oxide as the positive electrode active material. Under such circumstances, studies have been made to use a lithium-transition metal composite oxide containing at least Ni and having a ratio of Ni to all metal elements other than Li of 90 mol% or more. However, in this case, according to the methods proposed by Patent Literatures 1 and 2, it is difficult to sufficiently improve the reduction in discharge capacity that occurs during repeated charge-discharge cycles of a lithium secondary battery.

One aspect of the present disclosure relates to a lithium secondary battery, including: a positive electrode; a negative electrode; a separator disposed between the positive electrode and the negative electrode; and a non-aqueous electrolyte, wherein the positive electrode includes a lithium-transition metal composite oxide, the lithium-transition metal composite oxide contains at least Ni, and has a ratio of Ni to total metal elements other than Li of 90 mol% or more, in the negative electrode, lithium metal deposits during charge, and the lithium metal dissolves during discharge, and the non-aqueous electrolyte includes a non-aqueous solvent, lithium ions, an oxalate complex anion having fluorine, and nitrate anions.

According to the present disclosure, the reduction in discharge capacity that occurs during repeated charge-discharge cycles of a lithium secondary battery can be suppressed.

### [Brief Description of Drawing]

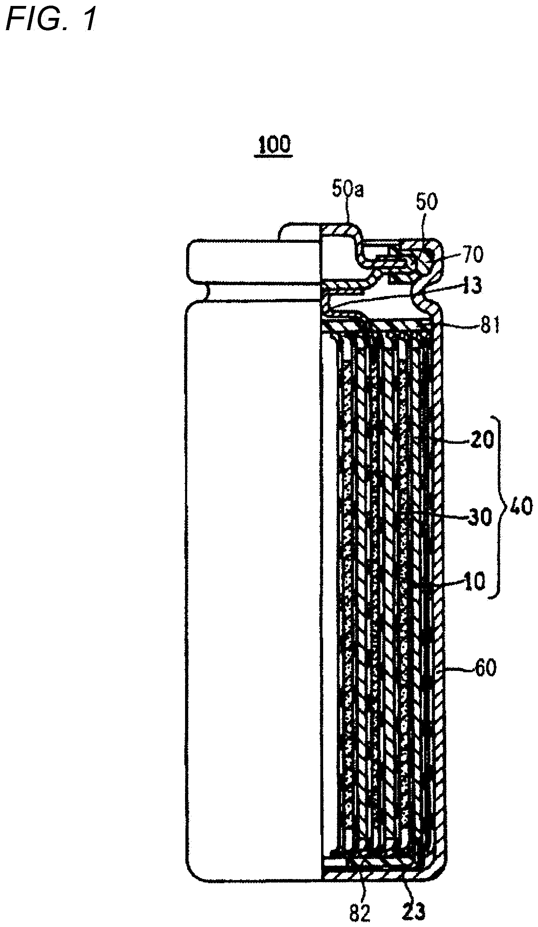

[FIG. 1] A schematic partial cross-sectional view of an example of a lithium secondary battery according to the present disclosure.

### [Description of Embodiments]

A lithium secondary battery according to the present disclosure includes a positive electrode, a negative electrode, a separator disposed between the positive electrode and the negative electrode, and a non-aqueous electrolyte. In the negative electrode, lithium metal deposits during charge, and the lithium metal dissolves during discharge. Specifically, the negative electrode has at least a negative electrode current collector, and lithium metal deposits on the negative electrode current collector. The lithium secondary battery according to the present disclosure is also referred to as a lithium metal secondary battery.

In a lithium (metal) secondary battery, for example, 70% or more of the rated capacity is developed through deposition and dissolution of lithium metal. The electron migration at the negative electrode during charge and discharge is mainly due to the deposition and dissolution of lithium metal at the negative electrode. Specifically, 70 to 100% (e.g., 80 to 100% or 90 to 100%) of the electron migration (or current flow in a different point of view) at the negative electrode during charge and discharge is due to the deposition and dissolution of lithium metal. That is, the negative electrode according to the present embodiment is distinct from a negative electrode in which the electron migration at the negative electrode during charge and discharge is mainly due to the absorption and release of lithium ions into or from the negative electrode active material (e.g., graphite).

Here, the positive electrode includes a lithium-transition metal composite oxide as a positive electrode active material. The lithium-transition metal composite oxide contains at least Ni, and has a ratio of Ni to total metal elements other than Li of 90 mol% or more. In the following, the lithium-transition metal composite oxide containing at least Ni, and having a ratio of Ni to all metal elements other than Li of 90 mol% or more is sometimes referred to as a composite oxide A. The composite oxide A has a particularly high capacity among lithium-transition metal composite oxides.

The complex oxide A desirably further contains Al. The crystal structure of a Ni-rich lithium-transition metal composite oxide tends to be unstable. In contrast, Al improves the stability of the crystal structure of the composite oxide A, thereby contributing to the improvement in thermal stability and the enhancement in durability. In the composite oxide A, the ratio of Al to all metal elements other than Li is 10 mol% or less. In view of achieving a further higher capacity, the above ratio of Al may be set to 7 mol% or less, and may be set to 5 mol% or less. On the other hand, in view of the stability of the crystal structure of the composite oxide A and the enhanced durability, the above ratio of Al may be 0 mol% or more, preferably 1 mol% or more, more preferably 3 mol% or more.

The lithium-transition metal composite oxide desirably further contains Co. Co contributes to the stability of the crystal structure of the composite oxide A, thereby contributing to the improvement in output characteristics and durability, and also to the development of capacity. In the composite oxide A, the ratio of Co to all metal elements other than Li is 10 mol% or less. In view of achieving a further higher capacity, the above ratio of Co may be set to 7 mol% or less, and may be set to 5 mol% or less. On the other hand, in view of improving the stability of the crystal structure of the composite oxide A and the output characteristics, the above ratio of Co is 0 mol% or more, preferably 1 mol% or more, more preferably 3 mol% or more.

Next, the non-aqueous electrolyte includes a non-aqueous solvent, lithium ions, an oxalate complex anion having fluorine (or a fluoro group), and nitrate anions.

The oxalate complex anion having fluorine (hereinafter sometimes referred to as a F-containing oxalate complex anion) acts to suppress the dendritic deposition of lithium metal. Note that, in the present embodiment, with an oxalate complex anion having no fluorine, if used instead of the F-containing oxalate complex anion, the dendritic deposition of lithium metal is difficult to be suppressed. In this case, a short circuit may be reached suddenly in the middle of charge-discharge cycles, resulting in a considerably shorter cycle life than expected.

During charge, potentially, a spike-like deposit may be formed on the negative electrode. With the spike-like deposit as its nucleus, a dendritic deposit of lithium metal grows. When the spike-like deposit (hereinafter sometimes referred to as a dendrite precursor) is left unattended, it becomes difficult to suppress the dendritic growth of the deposit.

In contrast, the F-containing oxalate complex anion decomposes at a higher potential than the other components contained in the non-aqueous electrolyte, forming a thin and uniform surface film on the lithium metal. The lithium metal is considered to deposit mainly between the surface film and the negative electrode current collector.

However, when the F-containing oxalate complex anion is contained in the non-aqueous electrolyte, the deterioration of the composite oxide A included in the positive electrode tends to be facilitated. In particular, a Ni-rich composite oxide A with small Co content will deteriorate severely due to the F-containing oxalate complex anion. Moreover, it is considered that the improved stability of the negative electrode makes all the more apparent the influence of the deterioration of the positive electrode to be exerted on the battery performance.

On the other hand, when the nitrate anion is contained in the non-aqueous electrolyte, the deterioration of the Ni-rich composite oxide A can be suppressed. The nitrate anion remarkably suppresses the reduction in discharge capacity that occurs during repeated charge-discharge cycles. This is presumably because the nitrate anion is adsorbed onto the composite oxide A, and the side reaction between the oxalate complex anion and the composite oxide A is suppressed.

In addition, the uniformity of the surface film derived from the F-containing oxalate complex anion improves remarkably especially when the nitrate anion is contained in the non-aqueous electrolyte. A highly uniform surface film derived from the nitrate anion and the F-containing oxalate complex anion covers a larger area of the lithium metal and has a high degree of flexibility. It is considered that since a flexible surface film is formed almost all over the surface of the lithium metal, the lithium metal is firmly pressed against the surface film. Due to the effect of this pressing, the growth of the deposit in a dendritic form can be suppressed. Also, when the lithium metal dissolves, the flexible surface film can easily follow the changes of the surface contour of the lithium metal. That is, the surface film constantly comes in contact with the lithium metal, allowing for the pressing effect to be easily exerted. As a result, the formation of dendrite precursors is remarkably suppressed, and the dendrite precursors are decreased, so that the effect of suppressing dendritic deposition of lithium metal can be remarkably improved.

The F-containing oxalate complex anion is derived from, for example, a F-containing oxalate complex salt. The F-containing oxalate complex salt may be, for example, a F-containing oxalate complex lithium salt, but is not limited thereto.

The F-containing oxalate complex anion preferably contains boron (B) or phosphorus (P). Examples of the F-containing oxalate complex anion containing boron include difluoro oxalate borate anion (BF₂(C₂O₄)⁻) (hereinafter sometimes referred to as FOB anion). Examples of the F-containing oxalate complex anion containing phosphorus include LiPF₄(C₂O₄), and LiPF₂(C₂O₄)₂. In particular, the F-containing oxalate complex anion containing boron is more preferable than the F-containing oxalate complex anion containing phosphorus in that the former can form a stable surface film on the lithium metal even at high temperatures, and the FOB anion is most preferable.

A concentration C1 of the F-containing oxalate complex anion in the non-aqueous electrolyte may be, for example, 0.1 mmol/L or more and 500 mmol/L or less, may be 10 mmol/L or more and 300 mmol/L or less, and may be set to 80 mmol/L or more and 150 mmol/L or less.

A concentration C2 of the nitrate anion in the non-aqueous electrolyte may be, for example, 0.1 mmol/L or more and 50 mmol/L or less, may be 0.5 mmol/L or more and 20 mmol/L or less, and may be set to 1 mmol/L or more and 10 mmol/L or less.

The nitrate anion, even with a small amount, can reduce the influence of the F-containing oxalate complex anion on the positive electrode. Therefore, the ratio C2/C1 of the concentration C2 to the concentration C1 may be, for example, 0.01 or more and less than 1, may be 0.01 or more and 0.6 or less, and may be 0.01 or more and 0.5 or less.

The non-aqueous solvent for the non-aqueous electrolyte desirably contains an ether compound. The ether compound is excellent in reduction resistance at the negative electrode and is less likely to cause a side reaction with the lithium metal. The ether compound, for example, desirably occupies 50% by volume or more of the whole non-aqueous solvent, may occupy 70% by volume or more, and may occupy 90% by volume or more. The whole non-aqueous solvent may be the ether compound. Here, the content of the ether compound is calculated on the assumption that all the components other than the ionic substance that dissociates in the non-aqueous electrolyte are regarded as the non-aqueous solvent.

The content of each component of the non-aqueous electrolyte can be determined using, for example, high-performance liquid chromatography, gas chromatography-mass spectrometry (GC-MS), NMR, inductively coupled plasma mass spectrometry (ICP-MS), and elemental analysis.

The ether compound includes, for example, a dialkyl ether having 1 to 5 carbon atoms. The dialkyl ether having 1 to 5 carbon atoms may be, for example, a chain ether compound represented by a general formula:

R1-(OCH₂CH₂)n-OR2

(hereinafter sometimes referred to as an ether compound A). The symbols R1 and R2 are each independently an alkyl group having 1 to 5 carbon atoms, and is preferably an alkyl group having 1 to 2 carbon atoms. The symbol n is 1 to 4, and is preferably 1 to 2. When the ether compound A is used as the major component of the non-aqueous solvent, the solubility of the lithium salt in the non-aqueous electrolyte is enhanced, and high fluidity and excellent lithium-ion conductivity of the non-aqueous electrolyte are ensured.

Here, the major component of the non-aqueous solvent refers to, for example, a component that occupies 20% by volume or more of the non-aqueous solvent. The ether compound A desirably occupies, for example, 20% by volume or more and 80% by volume or less of the non-aqueous solvent.

Examples of the ether compound include tetrahydrofuran, 1,2-dimethoxyethane (DME), 1,2-diethoxyethane, 1,2-dibutoxyethane, diethylene glycol dimethyl ether, diethylene glycol diethyl ether, diethylene glycol ethyl methyl ether, and diethylene glycol dibutyl ether, triethylene glycol dimethyl ether, and tetraethylene glycol dimethyl ether. The ether compound may be used singly, or in combination of two or more kinds.

As the ether compound, a fluorinated ether compound may be used. The fluorinated ether compound may be, for example, a difluoroalkyl ether having 1 to 4 carbon atoms. The fluorinated ether compound may occupy, for example, 20% by volume or more and 80% by volume or less of the non-aqueous solvent.

The fluorination rate of the fluorinated ether compound may be 60% or more, or may be 100%. Here, the fluorination rate of the fluorinated ether compound is the ratio expressed as a percentage (%) of the number of fluorine atoms to the total number of fluorine atoms and hydrogen atoms contained in the fluorine ether compound.

By using the fluorinated ether compound, the interaction of the oxygen in the ether backbone with lithium ions can be reduced. The fluorine atom contained in the fluorinated ether compound, because of its strong electronegativity, acts to attract electrons of the whole molecule of the fluorinated ether compound, inward toward the nuclei. By introducing fluorine into the ether compound, the orbital level of the lone pair electrons which would otherwise interact with lithium ions, on oxygen in the ether backbone is lowered. The orbital overlapping is relaxed, and the interaction between the lithium ions and the ether is weakened. Since lithium ions are hardly trapped in the fluorinated ether compound, lithium ions are likely to be reduced to lithium metal on the surface of the negative electrode. Therefore, a uniform SEI surface film can be formed, and the dendritic formation of lithium metal can be suppressed. Thus, the side reaction between the lithium metal and the non-aqueous electrolyte is suppressed, and the charge-discharge reaction can proceed more uniformly.

Specific examples of the fluorinated ether compound include 1,1,2,2-tetrafluoroethyl 2,2,2-trifluoroethyl ether, and 1,1,2,2-tetrafluoroethyl 2,2,3,3-tetrafluoropropyl ether. The fluorinated ether compound may be used singly, or in combination of two or more kinds.

When the non-aqueous solvent contains an ether compound, the charge-discharge reaction at the negative electrode can proceed more uniformly, but the influence of the deterioration of the positive electrode tends to be apparent. Therefore, the effect of the nitrate anion to suppress the deterioration of the Ni-rich composite oxide A is relatively increased. In other words, when the positive electrode includes the composite oxide A, and the non-aqueous electrolyte includes the F-containing oxalate complex anion and the ether compound, the nitrate anion can exert significant influence on the improvement in the charge-discharge cycle characteristics of the lithium secondary battery.

In the following, the lithium secondary battery according to the present disclosure will be specifically described for each constituent element.

### (Positive electrode)

The positive electrode includes a positive electrode active material. The positive electrode usually includes a positive electrode current collector, and a positive electrode mixture held on the positive electrode current collector. The positive electrode mixture contains the positive electrode active material as an essential component, and may contain a binder, a thickener, a conductive agent, and the like as optional components. The positive electrode usually includes the positive electrode mixture formed in a layer form (hereinafter, the positive electrode mixture layer) held on the positive electrode current collector. The positive electrode mixture layer can be formed by applying a positive electrode slurry prepared by dispersing constituent components of the positive electrode mixture in a dispersion medium, onto a surface of a positive electrode current collector, followed by drying. The applied film after drying may be rolled as needed.

As the positive electrode active material, at least the already-described composite oxide A is used. The composite oxide A is a lithium-transition metal composite oxide having a layered rock-salt type crystal structure. The composite oxide A is a major component of the positive electrode active material.

Here, the major component of the positive electrode active material refers to, for example, a component that occupies 50% by mass or more of the positive electrode active material. The composite oxide A occupies, for example, desirably 50% by mass or more, more desirably 70% by mass or more, further more desirably 90% by mass or more of the positive electrode active material.

The composition of the composite oxide A can be represented by, for example, Li_{α}Ni_{(1-x1-x2-x3-y)}Coₓ₁Mnₓ₂Alₓ₃M_{y}O_{2+β} where 0.95 ≤ α ≤ 1.05, 0.9 ≤ 1-x1-x2-x3-y ≤ 0.99, 0 ≤ x1 ≤ 0.1, 0 ≤ x2 ≤ 0.1, 0 ≤ x3 ≤ 0.1, 0 ≤ y ≤ 0.1, and -0.05 ≤ β ≤ 0.05. Here, M is at least one selected from the group consisting of Ti, Zr, Nb, Mo, W, Fe, Zn, B, Si, Mg, Ca, Sr, and Y

The x3 representing the ratio (atomic ratio) of Al desirably satisfies 0 < x3 ≤ 0.1, and desirably satisfies 0.01 ≤ x3 ≤ 0.1, in view of the thermal stability and the durability.

The x1 representing the ratio (atomic ratio) of Co desirably satisfies 0 < x1 ≤ 0.1, and desirably satisfies 0.01 ≤ x1 ≤ 0.1, in view of the output characteristics and the durability.

The (1-x1-x2-x3-y) representing the ratio (atomic ratio) of Ni desirably satisfies 0.9 ≤ 1-x1-x2-x3-y ≤ 0.95, in view of achieving a higher capacity and the stability.

Examples of the binder include fluorocarbon resins (e.g., polytetrafluoroethylene, polyvinylidene fluoride), polyolefin resins (e.g., polyethylene, polypropylene), polyamide resins (e.g., aramid resin), polyimide resins (e.g., polyimide, polyamide imide), acrylic resins (e.g., polyacrylic acid, polymethacrylic acid, acrylic acid-methacrylic acid copolymer, ethylene-acrylic acid copolymer, or salts thereof), vinyl resins (e.g., polyvinyl acetate), and rubbery materials (e.g., styrene-butadiene copolymer rubber (SBR)).

Examples of the thickener include cellulose derivatives, such as cellulose ether. The cellulose derivatives include, for example, carboxymethyl cellulose (CMC) and modified products thereof, and methyl cellulose. The modified products of CMC also include salts of CMC.

Examples of the conductive agent includes conductive fibers and conductive particles. Examples of the conductive fibers include carbon fibers, carbon nanotubes, and metal fibers. Examples of the conductive particles include conductive carbon (e.g., carbon black, graphite) and metal powder.

The positive electrode current collector is selected according to the kind of the non-aqueous electrolyte secondary battery. A metal foil may be used as the positive electrode current collector. The material of the metal foil may be, for example, stainless steel, aluminum, an aluminum alloy, titanium, or the like. The thickness of the positive electrode current collector is not limited, but may be, for example, 1 to 50 µm.

### (Negative electrode)

The negative electrode includes a negative electrode current collector. During charge, lithium metal deposits on the negative electrode current collector, and during discharge, the lithium metal dissolves. The lithium ions that form lithium metal are supplied from the non-aqueous electrolyte, and from the positive electrode, lithium ions are supplied to the non-aqueous electrolyte. The negative electrode may include a lithium ion storage layer (i.e., a layer that develops capacity by absorbing and releasing lithium ions into and from a negative electrode active material (e.g., graphite)) which is supported on the negative electrode current collector. In this case, the open circuit potential of the negative electrode at full charge may be 70 mV or less versus lithium metal (lithium dissolution-deposition potential). When the open circuit potential of the negative electrode at full charge is 70 mV or less versus lithium metal, the lithium ion storage layer at full charge has lithium metal on its surface. That is, the negative electrode develops a capacity through deposition and dissolution of lithium metal.

Here, "at full charge" means a state in which the battery is charged to, for example, a charged state of 0.98·C or more, where C is the rated capacity of the battery. The open-circuit potential of the negative electrode at full charge can be measured by disassembling a fully charged battery in an argon atmosphere, to take out the negative electrode, and assembling a cell using lithium metal as a counter electrode. The non-aqueous electrolyte of the cell may be of the same composition as that in the disassembled battery.

The lithium ion storage layer is a negative electrode mixture containing a negative electrode active material, formed in a layer form. The negative electrode mixture may contain, in addition to the negative electrode active material, a binder, a thickener, a conductive agent, and other components.

Examples of the negative electrode active material include a carbonaceous material, a Si-containing material, and a Sn-containing material. The negative electrode may include one kind or two or more kinds of negative electrode active materials. The carbonaceous material may be, for example, graphite, graphitizable carbon (soft carbon), non-graphitizable carbon (hard carbon), and the like.

The binder, the conductive agent, and other components may be, for example, like those exemplified for the positive electrode. The form and the thickness of the negative electrode current collector may be respectively selected from the forms and the range corresponding to those of the positive electrode current collector. The material of the negative electrode current collector (metal foil) may be, for example, stainless steel, nickel, a nickel alloy, copper, and a copper alloy.

### (Non-aqueous electrolyte)

The non-aqueous electrolyte is a concept that includes a non-aqueous electrolyte in a liquid form (i.e., non-aqueous liquid electrolyte), a gel electrolyte, and a solid electrolyte, and is a concept that does not include an aqueous electrolyte solution. The gel electrolyte and the solid electrolyte may be an electrolyte with no fluidity which is a composite formed of a non-aqueous liquid electrolyte and a gelling agent or matrix material.

The non-aqueous liquid electrolyte includes a non-aqueous solvent, lithium ions, a fluorine-containing oxalate complex anion, and nitrate anions. For example, the non-aqueous liquid electrolyte may include a non-aqueous solvent and a lithium salt dissolved in the non-aqueous solvent, and the lithium salt can include a F-containing oxalate complex lithium salt and lithium nitrate. The F-containing oxalate complex anion and the nitrate anion are not necessarily derived from the lithium salt, and for example, the nitrate anion may be derived from a nitrate salt other than the lithium salt.

The lithium salt can further include, for example, LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, lithium borates, and lithium imides, and the like. These may be used singly or in combination of two or more kinds.

Examples of the lithium imides include lithium bisfluorosulfonyl imide (LiN(FSO₂)₂) (hereinafter sometimes referred to as LiFSI), lithium bis(trifluoromethanesulfonyl)imide (LiN(CF₃SO₂)₂), lithium trifluoromethanesulfonyl fluorosulfonyl imide (LiN(CF₃SO₂)(FSO₂)), lithium trifluoromethanesulfonyl nonafluorobutanesulfonyl imide (LiN(CF₃SO₂)(C₄F₉SO₂)), and lithium bis(pentafluoroethanesulfonyl)imide (LiN(C₂F₅SO₂)₂).

The total concentration of lithium salts in the non-aqueous electrolyte may be, for example, 0.5 mol/L or more and 2 mol/L or less.

As the non-aqueous solvent, the already-described ether compound can be used, but another compound may also be used. For example, as at least part of the non-aqueous solvent, a cyclic carbonic acid ester, a chain carbonic acid ester, a cyclic carboxylic acid ester, a chain carboxylic acid ester, a chain ether, and the like may be used. Examples of the cyclic carbonic acid ester include propylene carbonate (PC), and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). Examples of the chain carboxylic acid ester include methyl formate, ethyl formate, propyl formate, methyl acetate (MA), ethyl acetate, propyl acetate, methyl propionate, ethyl propionate, and propyl propionate.

### (Separator)

It is desirable to interpose a separator between the positive electrode and the negative electrode. The separator is excellent in ion permeability and has moderate mechanical strength and electrically insulating properties. The separator may be, for example, a microporous thin film, a woven fabric, or a nonwoven fabric. The separator is preferably made of polyolefin (e.g., polypropylene, polyethylene).

### (Others)

The lithium secondary battery, for example, has a structure in which an electrode group formed by winding the positive electrode and the negative electrode with the separator interposed therebetween is housed in an outer body, together with the non-aqueous electrolyte. The wound electrode group may be replaced with a different form of electrode group, for example, a stacked electrode group formed by stacking the positive electrode and the negative electrode with the separator interposed therebetween. The lithium secondary battery may be in any form, such as cylindrical type, prismatic type, coin type, button type, or laminate type.

The configuration of an example of the lithium secondary battery of the present disclosure is schematically illustrated in FIG. 1 as a partial cross-sectional view. A lithium secondary battery 100 illustrated in FIG. 1 is a cylindrical secondary battery.

The lithium secondary battery 100 is a wound-type battery, and includes a wound electrode group 40 and a non-aqueous electrolyte. The electrode group 40 has a long positive electrode 10, a long negative electrode 20, and a separator 30. The separator 30 is disposed between the positive electrode 10 and the negative electrode 20. A positive electrode lead 13 is connected to the positive electrode 10. A negative electrode lead 23 is connected to the negative electrode 20.

The positive electrode lead 13 is connected at it one end to the positive electrode 10, and connected at the other end to a sealing body 50. The sealing body 50 includes a positive electrode terminal 50a. The sealing body 50 usually includes a mechanism that operates as a safety valve when the internal pressure of the battery rises.

The negative electrode lead 23 is connected at its one end to the negative electrode 20, and connected at the other end to the bottom of a case (case main body) 60. The case 60 functions as a negative terminal. The case 60 is a bottomed cylindrical can. The case 60 is made of metal, and is formed of, for example, iron. The inner surface of the iron case 60 is usually nickel-plated. On the top and bottom of the electrode group 40, respectively, upper and lower insulating rings 81 and 82 made of resin are disposed. The electrode group 40 and a non-aqueous electrolyte are disposed inside the case 60. The case 60 is sealed with the sealing body 50 and a gasket 70.

### [Examples]

In the following, the present disclosure will be specifically described with reference to Examples and Comparative Examples. It is to be noted, however, that the present invention is not limited to the following Examples.

### «Example 1»

### (1) Production of positive electrode

First, 100 parts by mass of positive electrode active material particles (composition: LiNi_{0.9}Co_{0.05}Al_{0.05}O₂), 1 part by mass of acetylene black, 1 part by mass of polyvinylidene fluoride, and an appropriate amount of N-methyl-2-pyrrolidone (NMP) were mixed, to obtain a positive electrode slurry. Next, the positive electrode slurry was applied onto both sides of an aluminum foil (positive electrode current collector), and the applied film was dried, followed by rolling, to form a positive electrode mixture layer (thickness: 95 µm, density: 3.6 g/cm³) on both sides of the aluminum foil. A positive electrode was thus obtained.

### (2) Preparation of negative electrode

A negative electrode (negative electrode current collector) was prepared by cutting an electrolytic copper foil (thickness: 10 µm) in a predetermined size.

### (3) Preparation of non-aqueous liquid electrolyte

In a non-aqueous solvent mixture containing DME (1,2-dimethoxyethane) and PC (propylene carbonate) in a volume ratio of 2:1, LiN(FSO₂)₂ (i.e., LiFSI) was dissolved at a concentration of 1 mol/L, in which lithium difluorooxalate borate (LiFOB) was further dissolved as a F-containing oxalate complex lithium salt at a concentration of 100 mmol/L, and lithium nitrate was further dissolved at a concentration of 5 mmol/L, to prepare a non-aqueous liquid electrolyte.

### (4) Fabrication of lithium secondary battery

An aluminum tab was attached to the positive electrode, and a nickel tab was attached to the negative electrode. Next, the positive electrode, the negative electrode, and the separator were placed such that the separator was disposed between the positive electrode and the negative electrode, and they were spirally wound together. The wound electrode group was housed in a bag-shaped outer body formed of a laminate sheet including an aluminum layer. After the non-aqueous liquid electrolyte was injected into the outer body, the outer body was sealed, to obtain a cell A1 for lithium secondary battery evaluation.

### «Example 2»

The concentration of the lithium nitrate in the non-aqueous liquid electrolyte was changed to 50 mmol/L, and a cell A2 was fabricated in a similar manner to in Example 1.

### «Example 3»

Dimethyl carbonate (DMC) was used in place of the PC in the non-aqueous solvent, and a cell A3 was fabricated in a similar manner to in Example 1.

### «Example 4»

The concentration of the LiFOB in the non-aqueous liquid electrolyte was changed to 500 mmol/L, and a cell A4 was fabricated in a similar manner to in Example 1.

### «Example 5»

DMC was used in place of the DME in the non-aqueous solvent, and a cell A5 was fabricated in a similar manner to in Example 1.

### <<Comparative example 1»

Neither the LiFOB nor the lithium nitrate was contained in the non-aqueous liquid electrolyte, and a cell B1 was fabricated in a similar manner to in Example 1.

### <<Comparative Example 2»

The lithium nitrate was not contained in the non-aqueous liquid electrolyte, and a cell B2 was fabricated in a similar manner to in Example 1.

### <<Comparative Example 3»

The LiFOB was not contained in the non-aqueous liquid electrolyte, and a cell B3 was fabricated in a similar manner to in Example 1.

### <<Comparative Example 4»

The composition of the positive electrode active material was changed to LiNi_{0.5}Co_{0.2}Al_{0.3}O₂, and a cell B4 was fabricated in a similar same manner to in Example 1.

### <<Comparative Example 5»

The lithium nitrate was not contained in the non-aqueous liquid electrolyte, and a cell B5 was fabricated in a similar manner to in Example 5.

### <<Comparative Example 6»

The LiFOB was not contained in the non-aqueous liquid electrolyte, and a cell B6 was fabricated in a similar manner to in Example 5.

### <<Comparative Example 7»

The lithium nitrate was not contained in the non-aqueous liquid electrolyte, and a cell B7 was fabricated in a similar manner to in Comparative Example 4.

### <<Comparative Example 8»

Lithium dioxalate borate (LiBOB) was contained in place of the LiFOB in the non-aqueous liquid electrolyte, and a cell B8 was fabricated in a similar same manner to in Example 1.

The compositions of the non-aqueous liquid electrolyte and the positive electrode active material are shown in Table 1.

**[Table 1]**

| Cell | Non-aqueous liquid electrolyte | | | | Positive electrode active material | | |
|---|---|---|---|---|---|---|---|
| | LiFOB (mmol/%) | LiBOB (mmol/%) | LiNO₃ (mmol/%) | Non-aqueous solvent | Ni (mol%) | Co (mol%) | Al (mol%) |
| A1 | 100 | 0 | 5 | DME/PC = 2/1 | 90 | 5 | 5 |
| A2 | 100 | 0 | 50 | DME/PC = 2/1 | 90 | 5 | 5 |
| A3 | 100 | 0 | 5 | DME/DMC = 2/1 | 90 | 5 | 5 |
| A4 | 500 | 0 | 5 | DME/PC = 2/1 | 90 | 5 | 5 |
| A5 | 100 | 0 | 50 | DMC/PC = 2/1 | 90 | 5 | 5 |
| B1 | 0 | 0 | 0 | DME/PC = 2/1 | 90 | 5 | 5 |
| B2 | 100 | 0 | 0 | DME/PC = 2/1 | 90 | 5 | 5 |
| B3 | 0 | 0 | 5 | DME/PC = 2/1 | 90 | 5 | 5 |
| B4 | 100 | 0 | 50 | DME/PC = 2/1 | 50 | 20 | 30 |
| B5 | 100 | 0 | 0 | DMC/PC = 2/1 | 90 | 5 | 5 |
| B6 | 0 | 0 | 50 | DMC/PC = 2/1 | 90 | 5 | 5 |
| B7 | 100 | 0 | 0 | DME/PC = 2/1 | 50 | 20 | 30 |
| B8 | 0 | 100 | 50 | DME/PC = 2/1 | 90 | 5 | 5 |

### <Battery evaluation>

### (Charge-discharge cycle characteristics)

The cell for evaluation was constant-current charged at a current of 0.3 It until the voltage reached 4.1 V in a temperature environment of 25 °C, and then constant-voltage charged at a voltage of 4.1 V until the current reached 0.05 It. Next, the cell was constant-current discharged at a current of 0.3 It until the voltage reached 2.5V. This charge-discharge cycle was repeated 100 times in total, and the ratio of the discharge capacity at the 100th cycle to the discharge capacity at the 1st cycle (C₁) was determined as a capacity retention rate (R₁₀₀). The results are shown in Table 2. The discharge capacity (Ci) is shown as a relative value (Index), with the value obtained in the cell A1 of Example 1 taken as 100.

### (Life end by short-circuiting (dendrite generation))

The above charge-discharge cycle was repeated after the 100th cycle, to determine the number of cycles (N) until a short circuit caused by dendrites of metal lithium occurred, and the voltage dropped sharply. The results are shown in Table 2.

**[Table 2]**

| Cell | C₁ | N | R₁₀₀ | Dendrites |
|---|---|---|---|---|
| A1 | 100 | 200< | 64.6 | None |
| A2 | 100 | 200< | 62.8 | None |
| A3 | 100 | 200< | 62.5 | None |
| A4 | 98 | 200< | 63.3 | None |
| A5 | 100 | 200< | 57.2 | None |
| B1 | 100 | 129 | 64.5 | Generated |
| B2 | 98 | 200< | 58.6 | None |
| B3 | 100 | 152 | 64.3 | Generated |
| B4 | 88 | 200< | 62.2 | None |
| B5 | 98 | 200< | 54.7 | None |
| B6 | 100 | 138 | 56.2 | Generated |
| B7 | 88 | 200< | 61.2 | None |
| B8 | 100 | 100> | 0 | Generated |

As can be understood from the comparison between Example 1 and Comparative Example 2, by containing an oxalate complex anion having fluorine in the non-aqueous liquid electrolyte, the generation of dendrites of metal lithium was remarkably suppressed, but on the other hand, the charge-discharge cycle characteristics (R₁₀₀) deteriorated. In contrast, in Examples in which an oxalate complex anion having fluorine and a nitrate anion were contained in the non-aqueous liquid electrolyte, the charge-discharge cycle characteristics (R₁₀₀) were remarkably improved.

Furthermore, as can be understood from the comparison between Comparative Examples 4 and 7, in both of which a lithium-transition metal composite oxide with low Ni content was used, the presence or absence of the nitrate anions had little influence on the charge-discharge cycle characteristics. In comparison between Comparative Examples 2 and 7, in both of which the nitrate anion was not used, Comparative Example 2 (R₁₀₀ = 58.6) in which a Ni-rich composite oxide A was used exhibited considerably deteriorated charge-discharge cycle characteristics, as compared to Comparative Example 7 (R₁₀₀ = 61.2) in which a lithium transition metal composite oxide with low Ni content was used. Such an effect of the nitrate anion to improve the deterioration of the charge-discharge cycle characteristics is particularly remarkable when a Ni-rich composite oxide A is used.

Moreover, in comparison between the improvement effect of Example 5 from Comparative Example 5, in both of which an ether compound was not contained in the non-aqueous liquid electrolyte, and that of Example 1 from Comparative Example 2, in both of which an ether compound was contained in the non-aqueous liquid electrolyte, the improvement effect of Example 1 from Comparative Example 2 is more remarkable than the other. This indicates that in the case of containing an ether compound in the non-aqueous liquid electrolyte, the action and effect of the nitrate anion becomes especially apparent.

The results of Comparative Example 8 show that even with LiBOB in the non-aqueous liquid electrolyte, neither the effect of suppressing dendrites nor the effect of improving charge-discharge cycle characteristics can be expected.

### [Industrial Applicability]

The present disclosure is applicable to a lithium secondary battery in which lithium metal deposits during charge, and the lithium metal dissolves during discharge.

### [Reference Signs List]

- 10: positive electrode
- 13: positive electrode lead
- 20: negative electrode
- 23: negative electrode lead
- 30: separator
- 40: electrode group
- 50: sealing body
- 50a: positive electrode terminal
- 60: case (case main body)
- 70: gasket
- 81: upper insulating ring
- 82: lower insulating ring
- 100: lithium secondary battery

## Claims

1. A lithium secondary battery, comprising:
a positive electrode; a negative electrode; a separator disposed between the positive electrode and the negative electrode; and a non-aqueous electrolyte, wherein
the positive electrode includes a lithium-transition metal composite oxide,
the lithium-transition metal composite oxide contains at least Ni, and has a ratio of Ni to total metal elements other than Li of 90 mol% or more,
in the negative electrode, lithium metal deposits during charge, and the lithium metal dissolves during discharge, and
the non-aqueous electrolyte includes a non-aqueous solvent, lithium ions, an oxalate complex anion having fluorine, and nitrate anions.

2. The lithium secondary battery according to claim 1, wherein the lithium-transition metal composite oxide further contains Al.

3. The lithium secondary battery according to claim 1 or 2, wherein the lithium-transition metal composite oxide further contains Co.

4. The lithium secondary battery according to any one of claims 1 to 3, wherein the oxalate complex anion having fluorine contains boron.

5. The lithium secondary battery according to any one of claims 1 to 4, wherein a concentration C1 of the oxalate complex anion having fluorine in the non-aqueous electrolyte is 0.1 mmol/L or more and 500 mmol/L or less.

6. The lithium secondary battery according to any one of claims 1 to 5, wherein a concentration C2 of the nitrate anion in the non-aqueous electrolyte is 0.1 mmol/L or more and 50 mmol/L or less.

7. The lithium secondary battery according to claim 6, wherein a ratio C2/C1 of the concentration C2 to the concentration C1 is 0.01 or more and less than 1.

8. The lithium secondary battery according to any one of claims 1 to 7, wherein 50% by volume or more of the non-aqueous solvent is an ether compound.
